(19) Europäisches Patentamt
European Patent Office
Office européen des brevets

(11) EP 2 216 347 A1

(12) # EUROPEAN PATENT APPLICATION

(43) Date of publication:
**11.08.2010 Bulletin 2010/32**

(21) Application number: **09151716.9**

(22) Date of filing: **30.01.2009**

(51) Int Cl.:
***C08F 2/00*** *(2006.01)* ***C08F 10/06*** *(2006.01)*
***C08F 4/649*** *(2006.01)* ***C08F 4/6592*** *(2006.01)*
***C08F 4/654*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Borealis AG**
**1220 Vienna (AT)**

(72) Inventors:
- **Leskinen, Pauli**
**00700, Helsinki (FI)**
- **Tuominen, Olli**
**00930, Helsinki (FI)**

(74) Representative: **Campbell, Neil Boyd**
**Dehns**
**St Bride's House**
**10 Salisbury Square**
**London**
**EC4Y 8JD (GB)**

(54) **A method of catalyst transitions in olefin polymerizations**

(57) A method for transitioning between two different catalysts during a continuous olefin polymerizations, more specifically in the production of polypropylene homo- or copolymers in a continuous slurry/gas phase polymerization reaction with a prior pre-polymerization reaction, said method comprises the steps of: a) discontinuing the feed of the first catalyst into the pre-polymerization reactor and then b) introducing the second catalyst into the prepolymerization reactor, c) adapting the reaction conditions in the prepolymerization reactor, the slurry reactor as well as in the subsequent gas phase reactor, wherein the transition is performed between a Ziegler-Natta catalyst and an self-supported, solid metallocene catalyst, prepared by using an emulsion/solidification technology or vice versa and, whereby the transition is performed in the absence of any additional agent which deactivates or kills the catalyst.

EP 2 216 347 A1

## Description

### Technical field

The present invention relates to a method of catalyst transitions in olefin polymerizations, particularly in the operation of an olefin polymerization plant. More particularly, the present invention relates to the transition between Ziegler-Natta catalysts and metallocene catalysts in the production of polypropylene. The transition is performed without the use of any catalyst deactivating agents.

### Background art

Polypropylene and polypropylene copolymers may be formed in a polymerization reactor in the presence of an appropriate catalyst and can be used for the preparation of miscellaneous end products, like films, pipes and moulded articles. One form of reactor suitable for propylene homopolymer and copolymer production is a loop reactor. Polymer particles exiting the loop reactor may be introduced into one or more subsequent polymerization reactors, such as for example one or more gas phase reactors, for further polymerization with other monomers, such as ethylene, to alter the physical and chemical properties of the propylene polymer resins. Additionally, the physical and chemical properties of the propylene resin may be tailored by the selection of one or more catalyst systems.
During the production of olefin polymers, like polypropylene homopolymers and polypropylene copolymers, in a commercial reactor it will often be necessary to transition from one type of catalyst system producing polymers having certain properties and characteristics to another catalyst system producing polymers having different specifications. The transition between similar or compatible catalysts generally takes place easily. However, when the catalysts are of different types and/or incompatible, e.g. it is well known that an active Ziegler-Natta catalyst may "poison" an active metallocene catalyst, the process is typically complicated. For example, to change from a Ziegler-Natta catalyst to a metallocene catalyst, or vice versa, normally requires a long transition period. Moreover, the polyolefins produced during this transition period will continuously change in properties. If the transition from one catalyst system to another requires substantial changes in reactor conditions, the risks of encountering production problems and producing polymers having extreme properties are likely. A transition from a polymerization reaction catalyzed by a first catalyst to a polymerization reaction catalyzed by a second catalyst is usually performed by stopping the polymerization process, empty the reactor, recharge and then introduce the second catalyst into the reactor. Such catalyst changes are time-consuming and costly because a reactor shut-down for an extended period of time is necessary during transition.
However, a polymerization reaction may be inhibited or stopped temporarily or permanently without emptying the reactor in a number of ways.

EP 0 604 993 discloses a method for the restarting of a vapour phase olefin polymerization that has been temporarily shut down. The olefin polymerization, utilizing a Ziegler catalyst, is stopped by introducing a deactivator, such as oxygen, water, carbon dioxide, carbon monoxide, alcohols or ketones. The reaction system is restarted by feeding an organoaluminium compound into the reaction system without discharging the previously formed polymer particles followed by the solid catalyst component.

WO 92/14766 describes the use of one volatile and one non-volatile catalyst killer for metallocene catalysts in a high pressure polymerization process, which is added downstream of the polymerization zone to suppress polymerization of the recycling monomer and the separated molten polymer. For metallocene/aluminoxane-based catalyst systems there may also be used methanol and n-butanol as catalyst killers.

US 4,460,755 discloses a method of transitioning a continuous olefin polymerization reaction catalyzed by a Ziegler type catalyst into one catalyzed by a chromium-based catalyst, without the need of emptying and recharging the polymerization reactor. The procedure comprises the steps of stopping the catalyst feed, introducing a hydroxyl-containing silica which reacts with the catalyst, and finally introducing a chromium-based catalyst, while maintaining polymerization conditions during the transition.

WO 95/26370 discloses a process for transitioning from a polymerization reaction catalyzed by a Ziegler-Natta catalyst to a metallocene catalyst. This is accomplished by a) discontinuing the feeding of the first catalyst into the reactor, b) introducing a reversible catalyst killer, c) introducing an irreversible catalyst killer, and d) feeding the second catalyst into the reactor. The Ziegler-Natta catalyst comprises silica impregnated with titanium chloride, magnesium chloride and tetrahydrofuran, and organoaluminium compounds. The metallocene catalyst comprises silica mixed with methylaluminoxane and bis-n-butylcyclopentadienyl-zirconiumdichloride and triethylaluminium as a co-catalyst. Only the transition from Ziegler-Natta catalysts to metallocene catalysts is exemplified. Carbon monoxide (CO) is used as a reversible catalyst killer and water as an irreversible catalyst killer.

In general, these prior art processes require that the first polymerization catalyst is "killed" or substantially deactivated. Although these technologies do mitigate problems resulting from undesirable reactions between two incompatible catalysts, these technologies may introduce other problems such as:

(i) the need to carefully control the addition of the deactivator agent (so that it does not become a poison for the new catalyst); and

(ii) the need to allow downtime for the deactivation reaction (and generally, the subsequent purging of the deactivator).

This second problem - i.e. "downtime" can cause further problems, particularly if it requires that polymer finishing operations (such as polymer degassing and pelletizing operations) be stopped and restarted. For example, the seals and/or bearings or mechanical pumps and compressors which are used in the polymer finishing operations may be more likely to fail during a shut down/start-up cycle than they would otherwise be during continuous operation.

It is well known that certain pairs of different polymerization catalysts are "incompatible" - for example: one catalyst may act as a "poison" for the other; or one catalyst may have a different reactivity ratio from the other; or one catalyst may have a different "hydrogen response" in comparison to the other. Further details relating to problems caused by incompatible catalysts are set out in USP 6,949,612.

In general, transition between incompatible catalysts have involved large amounts of off grade polymer production and/or lost production time.

In olefin polymerizations Ziegler-Natta catalysts are frequently used. Recent catalyst developments have resulted in use of single site catalysts (SSC), preferably metallocene catalysts, which comprise metallocene compounds of transition metals. These two types of catalysts are presently of great economic importance and therefore a time-saving transition from one of said catalysts to the other in the same polymerization plant would be highly desirable. However, said catalysts are incompatible and a direct transition between them normally is difficult.

Thus, it would be further highly advantageous to find a process for transitioning between Ziegler-Natta catalysts and metallocene catalysts without the need for halting the polymerization reactor to rid it of the original catalyst system and restarting the polymerization reaction with another catalyst system and/or without the need of any catalyst deactivator (catalyst killer). In addition, it would be advantageous if the process for transitioning could reduce the amount of off-grade material produced during the transition process, reduce the transition time, and increase the robustness and stability of the transition process.

**Summary of the invention**

The present invention provides a method for transitioning between two different catalysts during continuous olefin polymerizations, more specifically in the production of polypropylene homo- or copolymers in a continuous slurry/gas phase polymerization reaction with a prior pre-polymerization reaction.

Said method comprises the steps of: a) discontinuing the feed of the first catalyst into the pre-polymerization reactor and then b) introducing the second catalyst into the prepolymerization reactor, c) adapting the reaction conditions in the prepolymerization reactor, the slurry reactor as well as in the subsequent gas phase reactor, wherein the transition is performed between a Ziegler-Natta catalyst and a self-supported, solid metallocene catalyst, prepared by using an emulsion/solidification technology or vice versa and, whereby the transition is performed in the absence of any additional agent which deactivates or kills the catalyst.

**Detailed description of the invention**

Changing from one grade of polymer to another requires a transition period for a polymerization reactor to switch over to new resin specifications and corresponding process conditions such as reaction temperature, reactants and reactant ratios. During the transition from one product to another, off-grade polymer material is produced that does not have the desired resin flow property (e.g., melt index), isotacticity or xylene solubles content, or other properties of either the initial product or the desired target product. Since off-grade polymer material presents an economic loss, it is desirable to minimize the length of time a reactor produces such material and the amount of material that is produced.

A number of methods have been described to reduce transient, off-grade polymer material. Such methods have involved feeding a polymerization retarder or catalyst poison (e.g., CO2, 02) into the reactor, adjusting reaction gas composition, temperature and possibly pressure to new values, removing reactant gases from the reactor, reducing the catalyst feed rate, and/or adding a non-reactive gas such as nitrogen, among other remedial actions.

Despite existing approaches to limit off-grade material, there is a continuing need and desire to provide a more effective and efficient process to reduce the amount of off-grade polymer material produced during the transition to a new product or as a result of a fluctuation during steady state manufacture.

The present invention relates to a method for the transition between two different or incompatible catalysts, in particular a Ziegler-Natta catalyst and a self-supported, solid metallocene catalyst, prepared by using an emulsion/solidification technology, used in the polymerization of propylene.

Incompatible catalysts have different performances towards molecular weight regulators, such as hydrogen and comonomers. Moreover, they result in different comonomer incorporations and usually their reactivity ratios differ.

Such catalysts produce polymers that usually differ in molecular weight.

The method according to the invention is employed with a special process technology which uses a prepolymerization reactor and at least two reactors which are connected "in series", comprising at least one slurry reactor and at least one gas phase reactor. Slurry reactor is typically a loop reactor.

A preferred "loop-gas phase"-process, such as developed by Borealis A/S, Denmark (known as BORSTAR® technology) is described e.g. in patent literature, such as in EP 0887 379, in WO92/12182 or in WO 2005/002744.

Catalysts intended for use in such a process have to satisfy several process demands. They have to be insoluble in the polymerization medium, and they must produce polymers having a controlled morphology. Further, the amount of soluble polymer that can cause reactor fouling must be low, and also a low slurry viscosity should be maintained to keep the heat transfer coefficient high. Finally, the activity of the catalyst must be high to obtain sufficient productivity. Both the Ziegler-Natta and the metallocene catalyst used in the present invention fulfil these requirements.

Ziegler-Natta catalysts typically used for the method of transitioning between two incompatible catalysts according to the present invention are stereospecific, high yield Ziegler-Natta catalysts comprising as essential components Mg, Ti, Al and Cl. This type of catalysts comprise typically in addition to a solid transition metal (like Ti) component a cocatalyst(s) and external donor(s) as stereoregulating agent.

These compounds may be supported on a particulate support, such as inorganic oxide, like silica or alumina, or, usually, magnesium halide may form the solid support. It is also possible that the solid catalysts are self supported, i.e. the catalysts are not supported on an external support, but are prepared via an emulsion-solidification method.

The solid transition metal component usually also comprises an electron donor (internal electron donor). Suitable internal electron donors are, among others, esters of carboxylic acids, like phthalates, citraconates, and succinates. Also oxygen- or nitrogen-containing silicon compounds may be used.

Examples of suitable catalysts and compounds in catalysts are shown in among others, in WO 87/07620, WO 92/21705, WO 93/11165, WO 93/11166, WO 93/19100, WO 97/36939, WO 98/12234, WO 99/33842, WO 03/000756, WO 03/000757, WO 03/000754, WO 03/000755, WO 2004/029112, WO 92/19659, WO 92/19653, WO 92/19658, US 4382019, US 4435550, US 4465782, US 4473660, US 4560671, US 5539067, US5618771, EP45975, EP45976, EP45977, WO 95/32994, US 4107414, US 4186107, US 4226963, US 4347160, US 4472524, US 4522930, US 4530912, US 4532313, US 4657882, US 4581342, US 4657882.

In the present invention preferably solid Ziegler-Natta catalysts like a supported Ziegler Natta catalyst, e.g. an inorganic halide (e.g. $MgCl_2$) supported titanium catalyst or self supported solid Ziegler Natta catalysts, prepared via an emulsion-solidification method are employed.

More preferably special Ziegler-Natta catalysts are used for the method of transitioning between two incompatible catalysts according to the present invention.

These special Ziegler-Natta catalysts either

i) contain a spray crystallized or emulsion solidified adduct of $MgCl_2$ and a $C_1$-$C_2$ alcohol as carrier, $TiCl_4$ and internal donor, preferably being a transesterification product of a lower alcohol and a phthalic ester, and are described for example in the patent applications WO 87/07620; WO 92/19658; WO 92/19653 and EP 0 491 566 or

ii) are prepared by using an emulsion/solidification technology as described for example in WO 03/000757, WO 03/000754, WO 2004/029112, EP 1 862 481, EP 1 862 482 and EP 1 717 269.

Ziegler-Natta catalysts (i.e. the procatalyst) containing a transesterification product of a lower alcohol and a phthalic ester, suitable for the method of transitioning between two incompatible catalysts according to the present invention are prepared by

a) reacting a spray crystallized or emulsion solidified adduct of $MgCl_2$ and a $C_1$-$C_2$ alcohol with $TiCl_4$

b) reacting the product of stage a) with a dialkylphthalate of formula (I)

O, O, $R_1$', O, O, $R_2$' (I)

wherein $R_1$' and $R_2$' are independently at least a $C_5$-alkyl

under conditions where a transesterification between said $C_1$ to $C_2$ alcohol and said dialkylphthalate of formula (I) takes place to form the internal donor
c) washing the product of stage b) or
d) optionally reacting the product of step c) with additional $TiCl_4$.

First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.
The adduct, which is first melted and then spray crystallized or emulsion solidified, is used as catalyst carrier.
In the next step the spray crystallized or emulsion solidified adduct of the formula $MgCl_2$*nROH, wherein R is methyl or ethyl, preferably ethyl and n is 1 to 6, is contacted with $TiCl_4$ to form a titanised carrier, followed by the steps of

- adding to said titanised carrier

  (i) a dialkylphthalate of formula (I) with $R_1$' and $R_2$' being independently at least a $C_5$-alkyl, like at least a $C_8$-alkyl, or preferably
  (ii) a dialkylphthalate of formula (I) with $R_1$' and $R_2$' being the same and being at least a $C_5$-alkyl, like at least a $C_8$-alkyl
  or more preferably
  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-isooctylphthalate or diethylhexylphthalate, in particular diethylhexylphthalate,
  to form a first product

- subjecting said first product to suitable transesterification conditions, i.e. to a temperature between 100 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

(II)

  with $R_1$ and $R_2$ being methyl or ethyl, preferably ethyl, the dialkylphthalat of formula (II) being the internal donor and
- recovering said transesterification product as the procatalyst composition.

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.
This crystallized adduct is preferably used as the catalyst carrier and reacted to the procatalyst useful in the present invention as described in WO 92/19658 and WO 92/19653.
The transesterification is performed at a temperature above 100°C, advantageously between 110 to 150 °C, preferably between 120 - 140 °C.
As the catalyst residue is removed by extracting, an adduct of the titanised carrier and the internal donor is obtained, in which the group deriving from the ester alcohol has changed.
In case sufficient titanium remains on the carrier, it will act as an active element of the procatalyst.
Otherwise the titanisation is repeated after the above treatment in order to ensure a sufficient titanium concentration and thus activity.
Preferably the procatalyst used according to the invention contains 2.7% by weight of titanium at the most, preferably 2.5% by weight at the most, and more preferably 2.4 % by weight at the most. Its donor content is preferably between 5 to 14 % by weight and more preferably between 6 and 13 % by weight.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is a catalyst prepared according to WO92/19653; especially with the use of dioctylphthalate as dialkylphthalate of formula (I) according to WO 92/19658 or alternatively a polypropylene catalyst in the serie of Polytrack, commercially available from Grace.

In a further embodiment, the Ziegler-Natta procatalyst can be modified by polymerizing a vinyl compound in the presence of the catalyst system, comprising the special Ziegler-Natta procatalyst, an external donor and optionally a cocatalyst, which vinyl compound has the formula:

$$CH_2=CH-CHR_6R_7$$

wherein $R_6$ and $R_7$ together form a 5- or 6-membered saturated, unsaturated or aromatic ring or independently represent an alkyl group comprising 1 to 4 carbon atoms, and the modified catalyst is used for the preparation of the polymer composition. The polymerized vinyl compound can act as a nucleating agent.

Concerning the modification of catalyst reference is made to the international applications WO 99/24478, WO 99/24479 and WO 00/68315, incorporated herein by reference with respect to the reaction conditions concerning the modification of the catalyst as well as with respect to the polymerization reaction.

Further suitable Ziegler-Natta catalysts are Ziegler-Natta catalysts prepared by using an emulsion/solidification technology said process comprising the steps of:

a) preparing a solution of a complex of a Group 2 metal and an electron donor by reacting a compound of said metal with said electron donor or a precursor thereof in an organic liquid reaction medium,

b) adding said solution of said complex to at least one compound of a transition metal to produce an emulsion, wherein the dispersed phase of which is in the form of droplets and contains more than 50 mol% of the Group 2 metal in said complex,

c) agitating the emulsion in order to maintain the droplets of said dispersed phase within said predetermined average size range,

d) solidifying said droplets of the dispersed phase,

e) washing the solidified particles at least once,

f) drying the solidified particles or slurring the solidified particles to an oily liquid without drying and optionally

g) recovering the dried or slurried solidified particles of the olefin polymerization catalyst component.

The Group 2 metal used in step a) is preferably magnesium, and the liquid organic reaction medium comprises preferably a $C_6$-$C_{10}$ aromatic hydrocarbon, preferably toluene.

The electron donor compound to be reacted with the Group 2 metal compound is preferably a mono- or diester of an aromatic carboxylic acid or diacid, the latter being able to form a chelate-like structured complex. Said aromatic carboxylic acid ester or diester can be formed in situ by reaction of an aromatic carboxylic acid chloride or diacid dichloride with a $C_2$-$C_{16}$ alkanol and/or diol, and is preferable dioctyl phthalate.

The reaction for the preparation of the Group 2 metal complex is generally carried out at a temperature of 20° to 80°C, and in case that the Group 2 metal is magnesium, the preparation of the magnesium complex is carried out at a temperature of 50° to 70°C.

The complex of the Group 2 metal is preferably a magnesium complex.

The compound of a transition metal is preferably a compound of a Group 4 metal. The Group 4 metal is preferably titanium, and its compound to be reacted with the complex of a Group 2 is preferably a halide, more preferably $TiCl_4$.

The compound of a transition metal used in the process can also contain organic ligands typically used in the field known as a single site catalyst.

In a preferred embodiment, the process comprises preparing a solution of magnesium complex by reacting an alkoxy magnesium compound and an electron donor or precursor thereof in a $C_6$-$C_{10}$ aromatic liquid reaction medium; reacting said magnesium complex with a compound of at least one four-valent Group 4 metal at a temperature greater than 10°C and less than 60°C to produce an emulsion of a denser, $TiCl_4$/toluene-insoluble, oil dispersed phase having Group 4 metal/Mg mol ratio 0.1 to 10, preferably 1 to 5, in an oil disperse phase having Group 4 metal/Mg mol ratio 10 to 100, preferably 50 - 70; agitating the emulsion, optionally in the presence of an emulsion stabilizer and/or a turbulence minimizing agent, in order to maintain the droplets of said dispersed phase within an average size range of 5 to 200 $\mu$m. Generally the ratio of the mol ratio Group 4 metal/Mg in the disperse phase oil to that in the denser oil is at least 10. The catalyst particles are obtained after solidifying said particles of the dispersed phase e.g. by heating.

The production of a two-phase, rather than single-phase (as in prior practice) reaction product is encouraged

by carrying out the Mg complex/Group 4 metal compound reaction at low temperature, specifically above 10°C but below 60°C, preferably between above 20°C and below 50°C. Since the two phases will naturally tend to separate into a lower, denser phase and supernatant lighter phase, it is necessary to maintain the reaction product as an emulsion by agitation, preferably in the presence of emulsifying agents/emulsion stabilisers. For the said purposes e.g. surfactants, e.g. a class based on acrylic or methacrylic polymers can be used. Preferably, said emulsion stabilizers are acrylic or methacrylic polymers, in particular those with medium sized ester side chains having preferably 12 to 20 carbon atoms in the ester side chain. Particular preferred are unbranched $C_{12}$ to $C_{20}$-acrylates such as poly(hexadecyl)-methacrylate and poly (octadecyl)methacrylate.

Furthermore, in some embodiments a turbulence minimizing agent (TMA) can be added to the reaction mixture in order to improve the emulsion formation and maintain the emulsion structure.

Said TMA agent has to be inert and soluble in the reaction mixture under the reaction conditions, which means that polymers without polar groups are preferred, in particular preferably selected from $\alpha$-olefin polymers of $\alpha$-olefin monomers with 6 to 20 carbon atoms, like polyoctene, polynonene, polydecene, polyundecene or polydodecene or mixtures thereof, having the molecular weight and general backbone structure as defined before. Most preferable it is polydecene.

TMA can be added to the emulsion in an amount of e.g. 1 to 1.000 ppm, preferably 5 to 100 ppm.

Solidification of the dispersed phase droplets by heating is suitably carried out at a temperature of 70-150°C, usually at 80-110°C, preferably at 90-110°C.

The resulting particles from the dispersed phase of the emulsion are of a size, morphology (spherical shape) and uniformity which render the ultimate catalyst component extremely effective in olefin polymerization. This morphology is preserved during the heating to solidify the particles, and of course throughout the final washing and optional drying steps.

For isolating the solidified particles the reaction mixture is allowed to settle and the solidified particles are recovered from this reaction mixture for example by syphoning or by an in-stream filtering unit.

The solidified particles are then washed (step e) at least once up to e.g. six times, with a hydrocarbon, which preferably is selected from aromatic and aliphatic hydrocarbons. which might include $TiCl_4$ in it in an amount of from a few Vol% to more than 50 Vol. It is also possible that at least one wash is done with 100 Vol% $TiCl_4$. Washings can be done with hot (e.g. 90°C) or cold (room temperature) hydrocarbons or combinations thereof. It is also possible that all washings will be done with the same solvent, e.g. toluene.

The washing can be optimized to give a catalyst component with novel and desirable properties. Subsequently, the washed solidified particles are dried or slurried to an oily liquid without drying.

The finally obtained catalyst component is desirably in the form of particles having generally an average size range of 5 to 200 $\mu$m, preferably 10 to 100, more preferably 20 to 60 $\mu$m.

Typically the catalyst has a surface area measured according to ASTM D 3663 of less than 25 $m^2/g$, more preferably of less than 20 $m^2/g$, yet more preferably of less than 15 $m^2/g$, still yet more preferably of less than 10 $m^2/g$. In some embodiments, the catalyst in accordance with the present invention shows a surface area of 5 $m^2/g$ or less (ASTM D 3663), which is below the detection limit of the apparatus used (BET method/$N_2$).

Preparation and components of the catalyst as defined above is disclosed in detail in WO 03/000757 and WO 03/000754, which are incorporated here as references.

As is known, the addition of at least one halogenated hydrocarbon during the process can lead to further improved catalytic activity. Reactive halogenated hydrocarbons preferably have the formula $R'''X'''_n$ wherein R''' is an n-valent $C_1$-$C_{20}$ hydrocarbyl group, particularly a $C_1$-$C_{10}$ paraffin, X''' is a halogen and n is an integer from 1 to 4.

In addition, during the catalyst component preparation a reducing agent, which decreases the amount of titanium present in said solidified particles of the olefin polymerization catalyst component being present in the oxidation state +4, can be added.

Suitable reducing agents are aluminium compounds, as well as magnesium compounds as defined in the present specification.

Suitable aluminium compounds have a general formula $AlR_{3-n}X_n$, wherein R stands for a straight chain or branched alkyl or alkoxy group having 1 to 20, preferably 1 to 10 and more preferably 1 to 6 carbon atoms, X independently represents a residue selected from the group of halogen, preferably chloride, and n stands for 0, 1, 2 or 3, preferably 0, 1 or 2. At least one of the R residues has to be an alkyl group, in case n is 0, 1 or 2.

Illustrative examples of aluminium compounds to be employed in accordance with the present invention are:

Tri-($C_1$-$C_6$)-alkyl aluminium compounds and chlorinated aluminium alkyl compounds, especially diethyl aluminium chloride,

diethyl aluminium ethoxide, ethyl aluminium diethoxide, diethyl aluminium methoxide, diethyl aluminium propoxide, diethyl aluminium butoxide, dimethyl aluminium ethoxide, of which in particular diethyl aluminium ethoxide is preferred.

Suitable magnesium compounds are magnesium compounds as defined herein in connection with the complex of a Group 2 metal. In particular, suitable magnesium compounds are dialkyl magnesium compounds or halogenated alkyl magnesium compounds of the general formula $MgR_{2-n}X_n$, where each n is 0 or 1, and each R are same or different alkyl groups with 1 to 8 carbon atoms and X is halogen, preferably Cl. One preferred magnesium compound is butyloctyl magnesium (commercially available under the trade name BOMAG), which is already preferably used in the preparation of the Mg complex.

The optional Al or Mg compound is added in such an amount that the final catalyst component particles have Al content of 0,0 to 1 wt-%, preferably 0,1 to 0,8 wt-% or 0,2 to 0,5 wt-%.

The compound can be added as an optional compound to the catalyst component synthesis and brought into contact with the droplets of the dispersed phase of the agitated emulsion before drying or slurring the solidified particles in step f). I.e. the Al compound can be added at any step a) to d), or during the washing step e), however, before step f). Reference is made to WO 2004/029112, EP-A-1 862 480 and to EP-A-1 862 481.

Preferably an Al alkyl or Al alkyl alkoxy compound, as defined above, is added.

Furthermore a small amount of a phosphorous compound can be added during the preparation of the catalyst component; preferably to the magnesium complex, the liquid/liquid two-phase system during the catalyst component preparation prior to solidification, or to the washing liquid (step e), but again before step f).

The addition amount of the phosphorous compound is typically selected so that a molar ratio of Group 2 metal and phosphorous is within the range of 0.05 to 1, preferably 0.1 to 0.5, more preferably 0.1 to 0.3.

The phosphorous compound to be used in accordance with the present invention typically is a compound comprising phosphorous in the oxidation state of +5 or +3, preferably +5. Suitable examples of phosphorous compounds of the oxidation state of phosphorous of +3 are phosphines, such as tri-alkyl or tri-aryl phosphines, such as tri-phenyl phosphine. Preferred however are, as indicated above, phosphorous compounds comprising phosphorous in the oxidation state of +5.

The aluminium alkyl or alkoxy compound, the magnesium compound and the phosphorous compound can be used alone or in combination.

These Ziegler-Natta catalysts (variant i) and ii)) are usually used in combination with an external donor and an organometallic cocatalyst, as known in the art.

Accordingly the cocatalyst used preferably comprises an aluminium alkyl compound. The aluminium alkyl compound is preferably a trialkyl aluminium such as trimethylaluminium, triethylaluminium (TEA) , tri-isobutylaluminium or tri-n-octylaluminium. However, it may also be an alkylaluminium halide, such as diethylaluminium chloride (DEAC), dimethylaluminium chloride and alkyl aluminium sesquichloride, like ethylaluminium sesquichloride.
More preferably TEA or DEAC are used.

Suitable external donors are known in the state of the art and can be selected for example from the group consisting of di-iso-propyldiethoxysilane (DIPDES), cyclohexylmethyldiethoxysilane (CHMDES), dicyclopentyldimethoxysilane, cyclohexylmethyldimethoxysilane and dicyclopentadienyldiethoxysilane (DCPDES) and diethylaminotriethoxysilane. More preferably an external donor selected from cyclohexylmethyldimethoxysilane, dicyclopentyldimethoxysilane and di-iso-propyldiethoxysilane is used and most preferably the dicyclopentyldimethoxysilane is used.

Single site catalysts (SSC) include metallocene compounds of transition metals. A suitable class of metallocene catalysts used in this invention is prepared by using an emulsion/solidification technology as described for example in WO 03/051934 and WO2006/069733.

Said emulsion/solidification technology comprises the steps of

a) preparing a solution of one or more catalyst components;

b) dispersing said solution in a solvent immiscible therewith to form an emulsion in which said one or more catalyst components are present in the droplets of the dispersed phase,

c) solidifying said dispersed phase to convert said droplets to solid particles and optionally recovering said particles to obtain said catalyst.

By the term "preparing a solution of one or more catalyst components" is naturally meant that the catalyst forming compounds may be combined in one solution which is dispersed to the immiscible solvent, or, alternatively, at least two separate catalyst solutions for each or part of the catalyst forming compounds may be prepared, which are then dispersed successively to the immiscible solvent.

In a preferable embodiment of the invention a solution of one or more catalyst components, comprising said transition metal compound and optionally a cocatalyst (s), is combined with an inert solvent immiscible therewith to form an emulsion wherein that solvent forms the continuous liquid phase and the solution comprising the catalyst component (s) is dispersed in the form of droplets (discontinuous phase). The droplets are then solidified to form solid catalyst

particles, and the solid particles are separated from the liquid and optionally washed and/or dried.

The term "catalyst component" as used herein includes, in addition to said transition metal compound, also any additional cocatalyst (s) (e. g. additional transition metal compounds and/or activators and/or poison scavengers) and/or any reaction product (s) of a transition compound (s) and a cocatalyst (s). Thus the catalyst may be formed in situ from the catalyst components in said solution in a manner known in the art.

Suitable cocatalysts include aluminoxanes, also called alumoxanes,

Aluminoxanes are commercially available or can be prepared according to prior art literature for example by the hydrolysis of aluminium alkyls either by direct water addition or by treatment with salt hydrates.

Preferably, $C_1$-$C_{10}$-alkylalumoxanes, particularly methylalumoxane or modified methylalumoxane, isobutylalumoxane, e.g. TIBAO (tetraisobutylalumoxane) or HIBAO (hexaisobutylalumoxane) are used for step a). More preferably methylalumoxane (MAO) is used.

Most preferably MAO, commercially available as 5 to 30 wt% solution in an aromatic solvent, typically toluene, is used.

Preferably a solvent, more preferably an organic solvent, is used to form said solution of catalyst components. Still more preferably the organic solvent is selected from the group consisting of a linear alkane, cyclic alkane, linear alkene, cyclic alkene, aromatic hydrocarbon and halogen containing hydrocarbon.

Preferably the organic solvent used is a aromatic hydrocarbon.

Examples of aromatic hydrocarbons are toluene, benzene, xylene, ethylbenzene, cumene mesitylene or cymene. The preferred solvent used is toluene.

Moreover the immiscible solvent forming the continuous phase is an inert solvent, more preferably the immiscible solvent comprises a fluorinated organic solvent and/or a functionalized derivative thereof, still more preferably a semi-, highly- or perfluorinated hydrocarbon and/or a functionalized derivative thereof. It is in particular preferred, that said immiscible solvent comprises a perfluorohydrocarbon or a functionalized derivative thereof, preferably C3-C30 perfluoroalkanes, -alkenes or -cycloalkanes, more preferred $C_4$-$C_{10}$ perfluoro-alkanes, -alkenes or -cycloalkanes, particularly preferred perfluorohexane, perfluoroheptane, perfluorooctane or perfluoro (methylcyclohexane) or a mixture thereof. Furthermore it is preferred that the emulsion comprising said continuous phase and said dispersed phase is a bi-or multiphasic system as known in the art. An emulsifier may be used for forming the emulsion. After the formation of the emulsion system, said catalyst is formed in situ from catalyst components in said solution.

For contributing to the formation and/or stabilization of the emulsion emulsifying agent(s) may be used. I.e. as emulsifying agent any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated $C_1$ to $C_{30}$-alcohol, which reacts e.g. with a cocatalyst component, such as aluminoxane.

In principle any solidification method can be used for forming the solid particles from the dispersed droplets. According to one preferable embodiment the solidification is effected by a temperature change treatment. Hence the emulsion subjected to gradual temperature change of up to 10 °C/min, preferably 0.5 to 6 °C/min and more preferably 1 to 5 °C/min. Even more preferred the emulsion is subjected to a temperature 10 change of more than 40 °C, preferably more than 50 °C within less than 10 seconds, preferably less than 6 seconds.

Typically the catalyst has a surface area measured according to ASTM D 3663 of less than 25 $m^2/g$, more preferably of less than 20 $m^2/g$, yet more preferably of less than 15 $m^2/g$, still yet more preferably of less than 10 $m^2/g$. In some embodiments, the catalyst in accordance with the present invention shows a surface area of 5 $m^2/g$ or less (ASTM D 3663), which is below the detection limit of the apparatus used (BET method/$N_2$).

The catalyst system (B) can be additionally or alternatively defined by the pore volume. Thus it is appreciated that the catalyst system (B) has a porosity measured according to ASTM 4641 of less than 1.40 ml/g, more preferably of less than 1.00 ml/g, still more preferably of less than 0.50 ml/g and even less than 0.20 ml/g. In another preferred embodiment the porosity is not detectable when determined with the method applied as defined in the example section.

Moreover the catalyst system (B) typically has a mean particle size of not more than 500 μm, i.e. preferably in the range of 2 to 500 μm, more preferably 5 to 200 μm. It is in particular preferred that the mean particle size is below 80 μm, still more preferably below 70 μm. A preferred range for the mean particle size is 5 to 80 μm, more preferred 10 to 60 μm. In some cases the mean particle size is in the range of 20 to 50 μm.

For further details, embodiments and examples of the continuous and dispersed phase system, emulsion formation method, emulsifying agent and solidification methods reference is made e.g. to the above cited international patent application WO 03/051934.

The metallocene catalyst obtained with the above described process comprises

(α)a transition metal compound of formula (I)

$$L_mR_nMX_q \qquad (I)$$

wherein
"M" is a transition metal of anyone of the groups 3 to 10 of the periodic table (IUPAC 2007), preferably a transition metal of anyone of the groups 4 to 6 of the periodic table (IUPAC 2007), more preferably titanium (Ti), zirconium (Zr) or hafnium (Hf), i.e. zirconium (Zr) or hafnium (Hf),
each "X" is independently a monovalent anionic σ-ligand,
each "L" is independently an organic ligand which coordinates to the transition metal (M),
"R" is a bridging group linking two organic ligands (L),
"m" is 2 or 3,
"n" is 0, 1 or 2,
"q" is 1, 2 or 3,
m+q is equal to the valency of the transition metal (M),
and
(β) a cocatalyst (Co) comprising a compound of Al.

The organic ligands (L) and/or the bridging groups (R) can be any kind of residues of the transition metal compound as defined in the instant invention.

In a preferred definition, each organic ligand (L) is independently a substituted or unsubstituted cycloalkyldiene, preferably a cycloalkyldiene selected from the group consisting of unsubstituted cyclopentadiene, substituted cyclopentadiene, monofused derivative of a cyclopentadiene, bifused derivative of a cyclopentadiene and multifused derivative of a cyclopentadiene, preferably two, aromatic or non-aromatic rings and/or bear further substituents.
More preferably at least one of the organic ligands (L), preferably both organic ligands (L), is(are) selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl.

Further in case the organic ligands (L) are substituted it is preferred that at least one organic lignad (L), preferably both organic ligands (L), comprise(s)

(a) one or more residues independently selected from the group consisting of halogen, $C_1$ to $C_{10}$-alkyl, $C_2$ to $C_{20}$-alkenyl, $C_2$ to $C_{20}$-alkinyl, $C_3$ to $C_{12}$-cycloalkyl, $C_6$ to $C_{20}$-aryl, $C_7$ to $C_{20}$-arylalkyl, $C_3$ to $C_{12}$-cycloalkyl which contains 1, 2, 3 or 4 heteroatom(s) in the ring moiety, $C_6$ to $C_{20}$-heteroaryl and $C_1$ to $C_{20}$-haloalkyl,
or more preferably
(b) one or more residues independently selected from the group consisting of halogen, $C_1$ to $C_{10}$-alkyl, $C_3$ to $C_{12}$-cycloalkyl, $C_6$ to $C_{20}$-aryl, $C_7$ to $C_{20}$-arylalkyl, $C_3$ to $C_{12}$-cycloalkyl which contains 1, 2, 3 or 4 heteroatom(s) in the ring moiety, $C_6$ to $C_{20}$-heteroaryl and $C_1$ to $C_{20}$-haloalkyl.

Thus the transition metal compound has preferably the formula (II)

$$(Cp)_2R_nMX_2 \qquad (II)$$

wherein
"M" is zirconium (Zr), hafnium (Hf), or titanium (Ti), preferably zirconium (Zr) or hafnium (Hf),
each "X" is independently a monovalent anionic σ-ligand, preferably selected from the group consisting of hydrogen, halogen, $C_1$ to $C_{20}$-alkyl, $C_1$ to $C_{20}$-alkoxy, $C_2$ to $C_{20}$-alkenyl, $C_2$ to $C_{20}$-alkynyl,$C_3$ to $C_{12}$-cycloalkyl, $C_6$ to $C_{20}$-aryl, $C_6$ to $C_{20}$-aryloxy, $C_7$ to $C_{20}$ arylalkyl, $C_7$ to $C_{20}$-arylalkenyl, -SR", -PR"$_3$, -SiR"$_3$, -OSiR"$_3$ and -NR"$_2$, wherein
each R" is independently hydrogen, $C_1$ to $C_{20}$-alkyl, $C_2$ to $C_{20}$-alkenyl, $C_2$ to $C_{20}$-alkynyl, $C_3$ to $C_{12}$-cycloalkyl or $C_6$ to $C_{20}$-aryl,
each "Cp" is independently an unsaturated organic cyclic ligand which coordinates to the transition metal (M),
"R" is a bridging group linking two organic ligands (L),
"n" is 0 or 1, and
at least one "Cp"-ligand, preferably both "Cp"-ligands, is(are) selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl.

The substituted Cp-ligand(s) may have one or more substituent(s) being selected form the group consisting of halogen, hydrocarbyl (e.g. $C_1$ to $C_{20}$-alkyl, $C_2$ to $C_{20}$-alkenyl, $C_2$ to $C_{20}$-alkinyl, $C_3$ to $C_{12}$-cycloalkyl, $C_6$ to $C_{20}$-aryl or $C_7$ to $C_{20}$-arylalkyl), $C_3$ to $C_{12}$-cycloalkyl which contains 1, 2, 3 or 4 heteroatom(s) in the ring moiety, $C_6$ to $C_{20}$-heteroaryl,

$C_1$ to $C_{20}$-haloalkyl, -SiR"$_3$, -SR", -PR"$_2$ or -NR"$_2$, each R" is independently a hydrogen or hydrocarbyl (e. g.$C_1$ to $C_{20}$-alkyl, $C_2$ to $C_{20}$-alkenyl, $C_2$ to $C_{20}$-alkinyl, $C_3$ to $C_{12}$-cycloalkyl or $C_6$ to $C_{20}$-aryl) or e. g. in case of-NR"$_2$, the two substituents R" can form a ring, e.g. five-or six-membered ring, together with the nitrogen atom wherein they are attached to.

Further "R" of formula (II) is preferably a bridge of 1 to 7 atoms, e. g. a bridge of 1 to 4 C-atoms and 0 to 4 heteroatoms, wherein the heteroatom(s) can be e.g. silicon (Si), germanium (Ge) and/or oxygen (O) atom(s), whereby each of the bridge atoms may bear independently substituents, such as $C_1$ to $C_{20}$-alkyl, tri($C_1$ to $C_{20}$-alkyl)silyl, tri($C_1$ to $C_{20}$-alkyl)siloxy or $C_6$ to $C_{20}$-aryl substituents); or a bridge of 1 to 3, e.g. one or two, hetero atoms, such as silicon (Si), germanium (Ge) and/or oxygen (O) atom(s), e.g. -$SiR^1_2$-, wherein each $R^1$ is independently $C_1$ to $C_{20}$-alkyl, $C_6$ to $C_{20}$-aryl or tri($C_1$ to $C_{20}$-alkyl)silyl- residue, such as trimethylsilyl-.

The "Cp"-ligand of formula (II) is preferably cyclopentadienyl, indenyl, tetrahydroindenyl or fluorenyl, optionally substituted as defined above and may further bear a fused ring of 3 to 7 atoms, e.g. 4, 5 or 6, which ring may be aromatic or partially saturated.

In a suitable subgroup of the compounds of formula (II) each "Cp"-ligand independently bears one or more substituents selected from $C_1$ to $C_{20}$-alkyl, $C_6$ to $C_{20}$-aryl, $C_7$ to $C_{20}$-arylalkyl (wherein the aryl ring alone or as a part of a further moiety may further be substituted as indicated above), wherein R" is as indicated above, preferably $C_1$ to $C_{20}$-alkyl,

the ligand "X" is hydrogen (H), halogen, $C_1$ to $C_{20}$-alkyl, $C_1$ to $C_{20}$-alkoxy, $C_6$ to $C_{20}$-aryl, $C_7$ to $C_{20}$-arylalkenyl or -NR"2 as defined above, e.g. -N($C_1$ to $C_{20}$-alkyl)$_2$, and

the bridging group "R" is a methylene, ethylene or a silyl bridge, whereby the silyl can be substituted as defined above, e.g. a dimethylsilyl=, methylphenylsilyl= or trimethylsilylmethylsilyl= -bridge.

A specific subgroup includes the well known metallocenes of Zr, Hf and Ti with one or two, e.g. two, organic ligands (L) which may be bridged or unbridged cyclopentadienyl ligands optionally substituted with e.g. alkyl and/or aryl as defined above, or with two unbridged or bridged indenyl ligands optionally substituted in any of the ring moieties with e.g. alkyl and/or aryl as defined above, e.g. at 2-, 3-, 4- and/or 7-positions.

As specific examples e.g. bis (alkylcyclopentadienyl) Zr (or Ti or Hf) dihalogenides can be mentioned, such as bis-(n-butylcyclopentadienyl) $ZrCl_2$ and bis-(n-butylcyclopentadienyl) $HfCl_2$, see e.g. EP 129 368. Further, most preferred transition metal compound is cyclohexyl(methyl)silanediylbis[2-methyl-4-(4'-*tert*-butylphenyl)indenyl]zirconium dichloride.

Said transition metal compounds of formula (I) and (II) being of metallocene type and their preparation are well known in the art. Metallocenes as defined in the instant invention are particularly preferred.

The mol ratio of Al of the cocatalyst (Co) and the transition metal "M" of the transition metal compound shall be preferably kept in a specific ratio. Accordingly it is appreciated that the mol ratio of Al of the cocatalyst (Co) and the transition metal "M" of the transition metal compound [Al/M] is in a range of 100 to 800 mol/mol, more preferably in a range of 150 to 600 mol/mol, yet more preferably in a range of 200 to 400 mol/mol.

Metallocene compounds may be combined with an activator and/or additional cocatalyst or with the reaction product of an activator and/or cocatalyst, such as for example methylaluminoxane (MAO) and optionally an alkylation/scavenging agent such as trialkylaluminum compound (TEA, TMA and/or TIBAL).

The method according to the invention is a "flying" transition where the change from one type of produced polymer to another is continuous, that is without interrupting the polymerization reaction. When transitioning from a first to a second catalyst the initial step is to discontinue the catalyst feed. The new catalyst is then introduced and, if necessary, the reactor conditions are adapted to the conditions required by the new catalyst.

In the case of transition from a Ziegler-Natta catalyst, the transition is followed by IR measurements on the produced polymer to determine when the system is free from any Ziegler-Natta-based polymer, i.e. to determine when the produced polymer is within the metallocene polymer specifications. The transition can also be followed by melt index measurements of the produced polymer fluff.

Throughout this disclosure, the phrase "off- grade product" (e.g., "off- grade" polymer resin) assumes that the product is produced in a reactor with the intention that it meets a specification set (a set of one or more specifications for one or more properties of the product) and denotes that the product has at least one property that does not meet at least one specification in the specification set. For example, if the specification set requires that the product has a resin flow property (e.g., melt index) within a specified first range and an isotacticity or xylene solubles content within a specified range, the product is an off-grade product if its resin flow property is outside the first range and/or its isotacticity or xylene solubles content is outside the defined range.

A change from production of one grade of polymer to another typically requires a transition period for a polymerization reactor to switch over to a new resin specification set and corresponding process conditions such as reaction temperature, reactants and reactant concentration ratios. During a transition from an initial polymerization reaction intended to produce an initial resin product meeting a first specification set to a target polymerization reaction intended to produce a target resin product meeting a second specification set, off-grade polymer may be produced whose isotacticity or xylene solubles content (or other property) does not meet either the first or the second specification set.

Unless the transition is implemented appropriately, such off-grade product may become sticky under the conditions (including temperature) present during the transition, and agglomeration or sheeting (on the reactor wall or dome) as well as product discharge problems can result. Of course, both the initial and target reactions are typically intended to produce resin that will not become sticky under steady state reaction conditions.

The initial polymerization reaction is to produce polymer product with properties that meet a first (or initial) specification set, and the target polymerization reaction is to produce polymer resin product with properties that meet a second (or target) specification set.

The specific reactor conditions depend i.a. on catalyst activity, type and amount of optional comonomer, type of polymer to be produced, and the production equipment. Consequently, the specific conditions during transition between Ziegler-Natta and metallocene catalysts have to be determined for each specific product in a particular plant, which is within the skill of the art.

According to the invention the transitioning method is applied to a slurry/gas-phase polymerization process with prior prepolymerization for the production of polypropylene homo- or copolymers.

A suitable plant for the continuous production of polypropylene homo- or copolymers comprises for example feed systems, prepolymerization reactor, loop reactor and a fluidized bed gas phase reactor (GPR).

The method for a "flying" transition from the metallocene catalyzed polymerization to the Ziegler-Natta catalyzed polymerization or vice versa according to the invention includes the following steps:

In general, first a prepolymerization is conducted as bulk slurry polymerization, e.g. in a continuous stirred tank reactor (CSTR) or loop reactor, in liquid propylene, i.e. the liquid phase mainly comprises propylene, with minor amount of other reactants and optionally inert components dissolved therein.

The prepolymerization reaction is typically conducted at a temperature of 0 to 50 °C, preferably from 10 to 45 °C, and more preferably from 15 to 40 °C.

The pressure in the prepolymerization reactor is not critical but must be sufficiently high to maintain the reaction mixture in liquid phase. Thus, the pressure may be from 20 to 100 bar, for example 30 to 70 bar.

The catalyst components are preferably all introduced to the prepolymerization step. However, where the Ziegler-Natta catalyst, preferably a solid Ziegler-Natta catalyst (e.g. the Ziegler-Natta catalyst i) and ii)) and the metallocene catalyst) and the separate cocatalyst (if needed) can be fed separately it is possible that only a part of the cocatalyst is introduced into the prepolymerization stage and the remaining part into subsequent polymerization stages. Also in such cases it is necessary to introduce so much separate cocatalyst (where needed) into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

The thus obtained prepolymerized catalyst is then fed to the slurry reactor, preferably to a loop reactor.

For the loop reactors the reaction temperature will generally be in the range of 50 to 110 °C (e.g. 60 -100, or 70 to 110 °C), the reactor pressure will generally be in the range of 20 to 80 bar (e.g. 30-70 bar), the temperature during the metallocene catalyzed polymerization being 5 to 15°C below the temperature during the Ziegler-Natta catalyzed polymerization.

The residence time will generally be in the range of 0.2 to 5 hours (e.g. 0.3 to 2 hours). Preferably the residence time is in the range of 0.2 to 1 hour, more preferably in the range of 0.3 to 0.6 hours. The diluent used will generally be an aliphatic hydrocarbon having a boiling point in the range -70 to +100 °C. In such reactors, polymerization may if desired be effected under supercritical conditions.

The polymer produced in the loop reactor is then fed into the gas phase reactor.

For gas phase reactors, the reaction temperature used will generally be in the range of 50 to 130 °C (e.g. 60 to 115 °C, or 60 to 100 °C), the reactor pressure will generally be in the range of 5 to 60 bar, preferably 10 to 40 bar and the residence time will generally be 1 to 8 hours. The gas used will commonly be a non-reactive gas such as nitrogen together with monomer.

Hydrogen may be introduced into a reactor to control the molecular weight of the polymer as is well-known and routine in the art. In one embodiment, the mole ratio of hydrogen to total olefin monomer in the circulating gas stream is in a range of from 0.001 or 0.002 or 0.003 to 0.014 or 0.016 or 0.018 or 0.024, wherein a desirable range may comprise any combination of any upper mole ratio limit with any lower mole ratio limit described herein. Expressed another way, the amount of hydrogen in the reactor at any time may range from 1000 ppm to 20,000 ppm in one embodiment, and from 2000 to 10,000 in another embodiment, and from 3000 to 8,000 in yet another embodiment, and from 4000 to 7000 in yet another embodiment, wherein a desirable range may comprise any upper hydrogen limit with any lower hydrogen limit described herein.

Case 1: Transitioning between metallocene catalyzed polymerization to a Ziegler-Natta catalyzed polymerization

- First the metallocene catalyzed polymerization is started as is known in the state of the art by introducing a metallocene catalyst as described above via an oil catalyst feed system to the prepolymerization reactor. Furthermore propylene, hydrogen and a scavenger, like TEA or TIBAL, are added to the prepolymerization reactor.
- Then the prepolymerized catalyst, additional propylene and optionally additional hydrogen are introduced into the loop reactor, afterwards recovering the polymerization product from the loop reactor and conducting it to a gas phase reactor fluid bed, optionally feeding additional propylene and optional comonomer to the gas phase reactor, optionally feeding additional hydrogen to the gas phase reactor to control the hydrogen-to-propylene ratio to provide the desired molecular mass of the polymerization product, recovering the polymerization product from the gas phase reactor.
- The reaction conditions in the loop and the gas phase reactor (like temperature, pressure, amount of propylene and optional comonomers, amount of hydrogen) are chosen according to the desired product parameters of the first product.
- During metallocene catalyzed polymerization a Ziegler-Natta catalyst, as described above, is introduced in a catalyst feed tank, preferably into an oil catalyst feed tank (in case of variant b) or into a wax catalyst feed tank (in case of variant a) (about 130 to 200 min before introducing into the prepolymerization reactor).
- Before introducing the Ziegler-Natta catalyst into the prepolymerization reactor the donor feed already starts (about 30 min to 120 min before).
- Shortly before introducing the Ziegler-Natta catalyst into the prepolymerization reactor the cocatalyst feed already starts (about 5 min to 20 min before).
- Then the Ziegler-Natta catalyst is fed into the prepolymerization reactor.
- About 5 to 20 min afterwards the hydrogen feed is adapted to the need of the second polymerization product.
- Also the loop reaction conditions are adapted to the need of the second polymerization product, e.g. temperature is increased or the like.
- Further the gas phase reactor conditions are adapted to the desired product parameters of the second product.

For case 1 no kind of a separate killing agent is needed, because the donor needed for the Ziegler-Natta catalyst polymerization eliminates the metallocene polymerization immediately when it is introduced to the process. The Ziegler-Natta polymerization process starts immediately without remarkable disturbance in the polymerization process.
Preferably a short residence time in the loop reactor of about 0.2 to 1 h, preferably 0.3 to 0.6h contribute the catalyst change.
If the flying transitioning between the self-supported metallocene catalyst, prepared by the emulsion/solidification technology and the special Ziegler-Natta catalyst as described above is performed, the production is on normal level after about 1 to 5 hours and 2.5 to 9 hours later the second product meets the desired product specification.

Case 2: Transitioning between the Ziegler-Natta catalyzed polymerization to metallocene catalyzed polymerization

- First the Ziegler-Natta catalyzed polymerization is started as is known in the state of the art by introducing the Ziegler-Natta catalyst, as described above, via a catalyst feed tank, preferably via an oil catalyst feed system (in case of variant b) or via a wax catalyst feed system (in case of variant a) to the prepolymerization reactor. Furthermore propylene and hydrogen and optionally the cocatalyst and the external donor (whole amount or only part therefrom) are added to the prepolymerization reactor.
- Then the prepolymerized catalyst, additional propylene, hydrogen, optionally additional cocatalyst and external donor are introduced into the loop reactor, afterwards recovering the polymerization product from the loop reactor and conducting it to a gas phase reactor fluid bed, optionally feeding additional propylene and optional comonomer to the gas phase reactor, optionally feeding additional hydrogen to the gas phase reactor to control the hydrogen-to-propylene ratio to provide the desired molecular mass of the polymerization product, recovering the polymerization product from the gas phase reactor.
- The reaction conditions in the loop and the gas phase reactor (like temperature, pressure, amount of propylene and optional comonomers, amount of hydrogen) are chosen according to the desired product parameters of the first product.
- During Ziegler-Natta catalyzed polymerization a metallocene catalyst, as described above, is introduced into an oil catalyst feed tank. (about 130 to 200 min before introducing into the prepolymerization reactor)
- Before introducing the metallocene catalyst into the prepolymerization reactor the reaction conditions in the loop

reactor are adapted to the need of the second product, e.g. decreasing the temperature (about 100 to 180 min before)

- Afterwards the hydrogen feed in the gas phase reactor is adapted to the need of the second product. (e.g. closing of Hs feed or reducing the H2 feed) (about 80 to 150 min before)
- Then the H2 feed for the prepolymerization reactor and in the loop reactor is adapted to the need of the second product (about 70 to 100 min before)
- Subsequently the cocatalyst feed, e.g. the TEA feed and the donor feed are reduced (about 50 min to 70 min before).
- The donor feed is then stopped (about 15 min to 45 min before).
- Then the metallocene catalyst is fed into the prepolymerization reactor.
- About 10 to 40 min afterwards the gas phase reactor conditions are adapted to the desired product parameters of the second product.

Advantageously the special metallocene catalysts used according to the invention are not poison sensitive. In consequence of a right timing of the donor feed stop and short residence time in the loop reactor of about 0.2 to 2h, preferably 0.3 to 0.6h, the metallocene catalyzed polymerization starts immediately without any kind of disturbance in the polymerization process. Again no catalyst killer is needed.

If as Ziegler-Natta catalyst variant b) is used, the production rate does not drop.
The catalyst and grade change works for both variants without any troubles

The method according to the invention is especially suitable for a polymerization process, whereby first a polypropylene suitable for the production of biaxially oriented films is produced and then a second polypropylene suitable for moulding applications or vice versa is produced.
The polypropylene produced may be a homopolymer or a copolymer. Suitable comonomers are ethylene and $C_4$-$C_{10}$ alkylenes. Preferably ethylene is used as comonomer.
Furthermore the polypropylene produced may be unimodal or bimodal with respect to the molecular weight distribution.
Preferably the polypropylene produced with the metallocene catalyst is a polypropylene homopolymer suitable for producing biaxially oriented films, the polypropylene produced with the Ziegler-Natta catalyst variant (i) is a random polypropylene copolymer suitable for moulding applications and the polypropylene produced with the Ziegler-Natta catalyst variant (ii) is a polypropylene homopolymer suitable for moulding applications.

**Methods:**

The following definitions of terms and determination methods apply for the above general description of the invention as well as to the below examples unless otherwise defined.

**$MFR_2$ (230 °C)** is measured according to ISO 1133 (230 °C, 2.16 kg load).

**Bulk Density:**

The bulk density of the polymer powder was determined according to ASTM D1895-96, method A.

**Number average molecular weight ($M_n$), weight average molecular weight ($M_w$) and molecular weight distribution (MWD)** are determined by Gel Permeation Chromatography (GPC) according to the following method:

> The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**Porosity:** BET with $N_2$ gas, ASTM 4641, apparatus Micromeritics Tristar 3000; sample preparation (catalyst and poymer): at a temperature of 50 °C, 6 hours in vacuum.

**Surface area:** BET with $N_2$ gas ASTM D 3663, apparatus Micromeritics Tristar 3000: sample preparation (catalyst and poymer): at a temperature of 50 °C, 6 hours in vacuum. **Mean particle size** is measured with Coulter Counter LS200 at room temperature with n-heptane as medium; particle sizes below 100 nm by transmission electron microscopy

**Median particle size** ($d_{50}$) is measured with Coulter Counter LS200 at room temperature with n-heptane as

medium

**Comonomer content** was determined in a known manner based on Fourier transform infrared spectroscopy (FTIR) determination using Nicolet Magna 550 IR spectrometer together with Nicolet Omnic FTIR software calibrated with $^{13}C$-NMR

**Xylene solubles**

The xylene soluble fraction (XS) as defined and described in the present invention was determined as follows: 2.0 g of the polymer were dissolved in 250 mm p-xylene at 135 °C under agitation. After 30 minutes, the solution was allowed to cool for 15 minutes at ambient temperature and then allowed to settle for 30 minutes at 25 ± 0.5 °C. The solution was filtered with filter paper into two 100 mm flasks. The solution from the first 100 mm vessel was evaporated in nitrogen flow and the residue dried under vacuum at 90 °C until constant weight is reached. The xylene soluble fraction (percent) can then be determined as follows:

$$XS\% = (100 \times m_1 \times v_0)/(m_0 \times v_1),$$

wherein $m_0$ designates the initial polymer amount (grams), $m_1$ defines the weight of residue (grams), $v_0$ defines the initial volume (milliliter) and $v_1$ defines the volume of the analysed sample (milliliter).

The **Gel level** was measured by projection of cast film defects onto a screen with a measuring scale by means of an overhead projector according to Borealis Test Method 14210PP (available from Borealis).

The extruded film had a thickness of 50 μm and a width of about 12 cm, whereby the 10 cm middle section was used for gel counting 3 categories of gels were calculated: 0.2-0.7 mm, 0.7-2.5 mm and > 2.5mm The gels outside the 10 cm middle section were not counted.

The result was reported as number of gels per category/$m^2$.

**Examples:**

In the polymerizations exemplified below two types of catalysts were used, i.e. a metallocene catalyst and a Ziegler-Natta catalyst.

**A) As metallocene catalyst** a catalyst system based on complex:

*rac*-cyclohexyl(methyl)silanediylbis[2-methyl-4-(4'-*tert*-butylphenyl)indenyl]zirconium dichloride was used

Catalyst system is prepared as follows:

In a 50-mL glass reactor, equipped with an overhead stirrer, a liquid-liquid 2-phase system was generated at 0 °C from 40 mL of hexadecafluoro-1,3-dimethylcyclohexane (PFC) and a catalyst solution based on 89 mg of *rac*-cyclohexyl(methyl)silanediylbis[2-methyl-4-(4'-*tert*-butylphenyl)indenyl]zirconium dichloride contacted with 5 mL of a 30 wt-% methylaluminoxane solution in toluene for 30 min. To that mixture, 0.4 mL of (2,2,3,3,4,4,5,5,6,6,7,7,8,8,9,9,9-heptadecafluorononyl)oxirane solution in PFC [prepared by mixing 0.5 mL (2,2,3,3,4,4,5,5,6,6,7,7,8,8,9,9,9-heptadecafluorononyl)oxirane + 4.5 mL PFC] was added. The reaction mixture was stirred for 3 min, emulsion stability was verified, and stirring (570 rpm) was continued still for 15min at 0 °C, after which the emulsion was transferred via cannula under stirring to 100 mL of hot PFC (heated up with an oil bath at 90 °C, and stirred at 400 rpm). Stirring was continued for 15 min, after which the oil bath was taken down and the mixing speed was reduced to 300 rpm and finally switched off. The catalyst was let to float by waiting for 45 min, after which PFC was syphoned away. The solid powder was dried for 2 hours at 50 °C under argon flow. The mean particle size of the powder was measured by Coulter counter to be 13 μm. Porosity and surface area were both below the measurement limit.

| | |
|---|---|
| Porosity: | Below the detection limit |
| Surface area: | Below the detection limit |
| Particle mean size: | 13 μm |

**B) The Ziegler-Natta catalyst according to variant a)** was prepared prepared according to the following procedure:

First, 0.1 mol of $MgCl_2$ x 3 EtOH was suspended under inert conditions in 250 ml of decane in a reactor at atmospheric pressure. The solution was cooled to the temperature of -15°C and 300 ml of cold $TiCl_4$ was added while maintaining the temperature at said level. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of $TiCl_4$ was added and the temperature was kept at 135 °C for 120 minutes. After this, the catalyst was filtered from the liquid and washed six times with 300 ml heptane at 80 °C. Then, the solid catalyst component was filtered and dried. Catalyst and its preparation concept is described in general e.g. in patent publications EP491566, EP591224 and EP586390.

**C) The Ziegler-Natta catalyst according to variant b) was prepared as follows:**

Preparation of the Mg complex

A magnesium complex solution was prepared under inert conditions in a nitrogen atmosphere by adding, with stirring, 55.8 kg of a 20 % solution in toluene of BOMAG ($Mg(Bu)_{1,5}(Oct)_{0,5}$) to 19,4 kg 2-ethylhexanol in a 150 l steel reactor. During the addition the reactor contents were maintained below 20 °C. The temperature of the reaction mixture was then raised to 60 °C and held at that level for 30 minutes with stirring, at which time reaction was complete. 5.50 kg 1,2-phthaloyl dichloride was then added and stirring of the reaction mixture at 60 °C was continued for another 30 minutes. After cooling to room temperature a yellow solution was obtained.

The solid catalyst component was further prepared according to Example 8 of WO 2004/029112, except that diethylaluminium chloride was used as an aluminium compound instead of triethylaluminium.

**1. Example 1-5:**

Transitions from metallocene catalyst (Catalyst A) to Ziegler-Natta catalyst (Catalyst C) and back in a Pilot Plant scale having a prepolymerization reactor, a loop reactor and a gas phase reactor in series.

**Example 1: Polymerization using the Metallocene catalyst A**

The metallocene catalyst was mixed into oil (Mineral oil; Primol 352) in the catalyst feed tank so that the catalyst content in the oil was 1.0 wt-%. Said mixture of catalyst and oil was fed continuously by pump into the polymerization process.

The catalyst was flushed with propylene to the continuous prepolymerization reactor (50 $dm^3$ CSTR). The prepolymerization reactor was operated at the temperature of 35°C and pressure of 55 bar. The residence time in the prepolymerization reactor was 0.4h. Hydrogen feed to the prepolymerization reactor was 0.4 - 0.6 g/h. TEA was used as a scavenger and the feed amount to the prepolymerization reactor was 20 g/t propylene.

The prepolymer was continuously removed from the prepolymerization reactor and passed into a 150 $dm^3$ slurry loop reactor which was connected in series by an 8.0 $m^3$ gas phase reactor.

The operating temperature in loop reactor was 70°C and the pressure was 55 bar. The fresh propylene feed and propylene from prepolymerization reactor was altogether 147 kg/h. The residence time in the loop reactor was about 0.55h.

The polypropylene measured after loop had $MFR_2$ (230°C) of 1.1 g/10 min and XS was 1.5 wt-%.

The loop product was transferred to the $1^{st}$ GPR via direct feed line between Loop and $1^{st}$ GPR.

The $1^{st}$ GPR was operated at 85°C and the total pressure was 30 bar. The residence time of the polymer was controlled so that the production split between loop and gas phase reactor was between 40/60 and 60/40 %. Hydrogen was fed enough to keep $MFR_2$ (230°C) after $1^{st}$ GPR 2 - 4 g/10 min. XS after reactor was 0.8 wt-%.

A polypropylene homopolymer, suitable for producing biaxially oriented polypropylene films, was produced.

**B) Start of transitioning**

The transition procedure was started 3 hours before the actual introduction of the Ziegler-Natta catalyst C) into the prepolymerization reactor by introducing the catalyst C) into a $2^{nd}$ oil (Mineral oil; Primol 352) catalyst feed tank.

1 hour before the actual introduction of the Ziegler-Natta catalyst C) into the prepolymerization reactor the dicyclopentyldimethoxysilane (DCPDMS) feed was started. The feed amount was 20g donor/t propylene.

15 min before the actual introduction of the Ziegler-Natta catalyst C) into the prepolymerization reactor the cocatalyst

feed was started. As cocatalyst TEA was used. The feed amount was 200g TEA/t propylene.

The detailed operation parameters are shown in Tables 1; Example 1.

**C) Transitioning to Ziegler-Natta catalyst C**

1,3 g/h of catalyst C) was then continuously introduced into the prepolymerization reactor.

15 min afterwards the hydrogen feed was adjusted to the need of the second product to be produced.

20 min after the introduction of the catalyst C) into the prepolymerization reactor the temperature of the loop reactor was increased to 80°C (5°C/h).

30 min after the introduction of the catalyst C) into the prepolymerization reactor the conditions in the gas phase reactor were adapted to the need of the second product to be produced.

The second product to be produced was homopolypropylene for MO applications with an MFR of 6-8 g/10min and a density of 910 kg/$m^3$

The transition period lasted for 8 hours, in which period about 350 kg of transition material ("off grade) was produced.

During the transition period both metallocene and Ziegler-Natta catalyzed polymers were produced. This transition material was not suited for moulding nor film processing.

**D) Examples 2 and 3: Stable production with Ziegler-Natta catalyst C**

Two homopolypropylene lots (350 kg each) for MO applications were produced in stable process conditions with Ziegler-Natta catalyst C. Polymerization conditions are presented in Table 1, Examples 2 and 3.

The measured gel level of the final polypropylene was on the acceptable level for (MO) Moulding grades.

**E) Transition back to the metallocene catalyst A**

After a production campaign of about 750 kg Ziegler-Natta-based polypropylene the transition back to metallocene-based catalyst was started.

The transition procedure was started 3 hours before the actual introduction of the metallocene catalyst A) into the prepolymerization reactor by introducing the catalyst A) into the 2$^{nd}$ oil (Mineral oil; Primol 352) catalyst feed tank.

2.5 hours before the actual introduction of the metallocene catalyst A) into the prepolymerization reactor the loop temperature was decreased down to 70°C (5°C/h).

2 hours before the actual introduction of the metallocene catalyst A) into the prepolymerization reactor the hydrogen feed into the gas phase reactor was closed.

1.5 hours before the actual introduction of the metallocene catalyst A) into the prepolymerization reactor the H2 feed into the prepolymerization reactor and into the loop reactor was adapted to the need of the first reaction product (polypropylene homopolymer as described under Example 1, A).

1 hour before the actual introduction of the metallocene catalyst A) into the prepolymerization reactor the TEA cocatalyst feed was reduced to 20 g TEA/t propylene and the donor feed was reduced to 10g donor/t propylene.

35 min before the actual introduction of the metallocene catalyst A) into the prepolymerization reactor the donor feed was stopped completely.

2,3 g/h of catalyst A) was then introduced into the prepolymerization reactor.

30 min after the introduction of the catalyst A) into the prepolymerization reactor the conditions in the gas phase reactor were adapted to the need of the first product to be produced.

After an approximately 3 hour transition period the produced polymer complied with the specifications of the initially produced metallocene-catalyzed polymers (according to Example 1 A).

Thus, the transition period from Ziegler-Natta catalyst C) to metallocene-based catalyst A) was significantly shorter than the transition period from metallocene-based catalyst A) to Ziegler-Natta catalyst C)

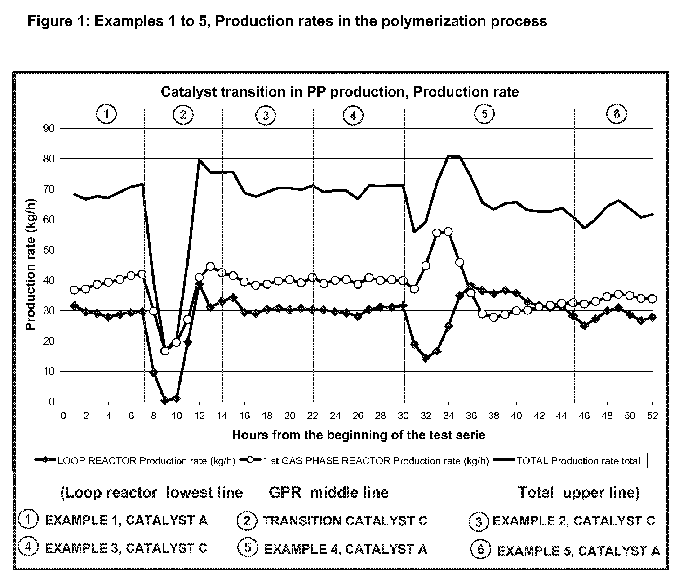

Furthermore the production rate did not drop in case of transition from Ziegler-Natta catalyst C) to metallocene-based catalyst A). This is presented in the Figure 1.

**F) Examples 4 and 5: Stable production with Metallocene catalyst A**

Two polypropylene lots 300 and 360 kg were produced in stable process conditions with metallocene catalyst A. Polymerization conditions are presented in Table 1, Examples 4 and 5. The measured gel level was on the acceptable level for the Moulding and Film grades.

**2. Example 6:**

Transition from Ziegler-Natta catalyst (Catalyst B) to metallocene catalyst (Catalyst A) in a Pilot Plant scale having a prepolymerization reactor, a loop reactor and a gas phase reactor in series.

**A) Polymerization using the Ziegler-Natta (Catalyst B) catalyst**

Mineral Oil (Primol 352) and Grease (Snowwhite MD) at a weight ratio of 3:2 were used in catalyst wax preparation. The catalyst B concentration in oil-grease mixture was 1,5 wt-%. Said mixture of catalyst B and viscous medium (catalyst wax) was fed continuously (2,5 g/h) via a wax catalyst feed system into a 50 $dm^3$ prepolymerization reactor and was prepolymerized in the presence of propylene and TEA (200 g/t propylene) as cocatalyst and dicyclopentyldimethoxysilane) (DCPDMS) (23 g/t propylene) as an external donor.

Temperature in the prepolymerization reactor was 30°C, pressure 55 bar(g) and H2 feed was 0.4 g/h. The residence time was controlled to 0.31 h with about 75 kg/h propylene feed.

The prepolymer is continuously removed from the polymerization reactor and passed into a 150 $dm^3$ slurry loop reactor which was connected in series with an 8.0 $m^3$ gas phase reactor.

The polymerization temperature in the loop reactor was 70°C and pressure 55 bar.

The fresh propylene feed and propylene from prepolymerization reactor was altogether 160 kg/h. The residence time in the loop reactor was about 0.4h. There was no separate H2 fed to the loop reactor since MFR of the loop was controlled with the H2 feed to the prepolymerization reactor. Further ethylene was introduced into the loop as comonomer.

The polypropylene measured after loop had $MFR_{10}$ (230°C) of 0.8 g/10 min and XS was 9.5 wt-% and the C2 content was 4.4 wt-%.

Loop product was transferred to the $1^{st}$ GPR via direct feed line between Loop and $1^{st}$ GPR.

The $1^{st}$ GPR was operated at 85°C and the total pressure was 20 bar. The residence time of the polymer was controlled so that the production split between loop and gas phase reactor was between 40/60 and 60/40 %. Hydrogen was fed enough to keep $MFR_2$ (230°C) after $1^{st}$ GPR 0.3 g/10 min.

Further ethylene was introduced into the gas phase reactor as comonomer. C2/C2 molar ratio in the GPR was 30 mol/kmol and the C2 content in the final random polypropylene was 3.8 wt-%. XS after reactor was 6.8 wt-%.

**B) Start of transitioning**

The transition procedure was started 2.5 hours before the actual introduction of the metallocene catalyst A) into the prepolymerization reactor by introducing the catalyst A) into an oil (Mineral Oil; Primol 352) catalyst feed tank.

2 hour before the actual introduction of the metallocene catalyst A) into the prepolymerization reactor the ethylene feed to the loop and the gas phase reactor was stopped and the loop temperature was decreased to 65°C.

1.5 hours before the actual introduction of the metallocene catalyst A) into the prepolymerization reactor the H2 feed into the gas phase reactor was adapted to the need of the second product to be produced (polypropylene homopolymer, see Example 1 and Examples 4 and 5).

1.2 hours before the actual introduction of the metallocene catalyst A) into the prepolymerization reactor the H2 feed into the prepolymerization reactor and into the loop reactor was adapted to the need of the second product to be produced.

1 hour before the actual introduction of the metallocene catalyst A) into the prepolymerization reactor the TEA feed was decreased to 20 g TEA/ t propylene and the donor feed was decreased to 20g donor/t propylene.

**C) Transitioning**

2,5 g/h of catalyst A) was then introduced into the prepolymerization reactor. 30 min after the introduction of the catalyst A) into the prepolymerization reactor the conditions in the gas phase reactor were adapted to the need of the second product to be produced. Polymerization conditions in the gas phase reactor, raw material feeds and the production split were like in the Examples 1, 4 and 5.

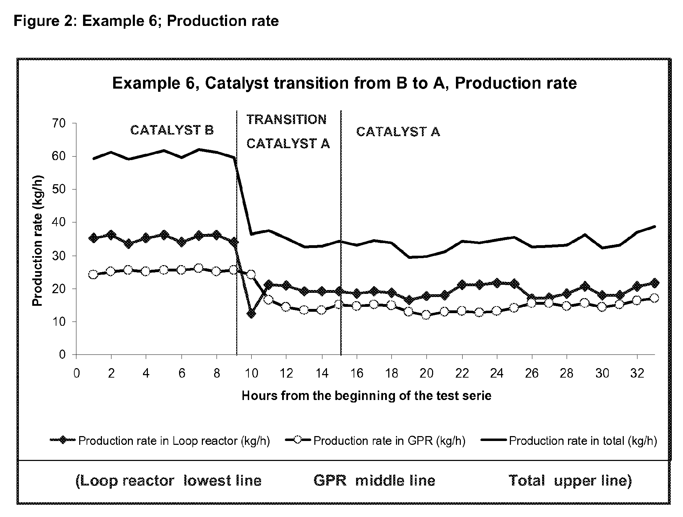

The production rate dropped only due to the lower polymerization temperature and there was no ethylene feed with catalyst A to the reactor in case of transition from Ziegler-Natta catalyst B) to metallocene-based catalyst A). This is presented in Figure 2.

Again a polypropylene homopolymer, suitable for producing biaxially oriented polypropylene films, was produced with and MFR about 2-4 g/10min and an XS of about 0.8 wt% as in Examples 1, 4 and 5.

The transition period lasted for 6 hours, in which period about 300 kg of transition material (off grade) was produced.

**Table 1: Examples 1 to5, Polymerization conditions**

| | | **Ex 1** | **Ex 2** | **Ex 3** | **Ex 4** | **Ex 5** |
|---|---|---|---|---|---|---|
| | Catalyst | A | C | C | A | A |
| **Prepoly Reactor** | Catalyst feed (g/h) | 1.8 | 1.3 | 1.3 | 2.3 | 2.5 |
| | DCPDMS-donor feed (g/t propylene) | 0 | 20 | 20 | 0 | 0 |
| | TEA feed (g/t propylene) | 20 | 200 | 200 | 35 | 20 |
| | Temperature (°C) | 35 | 35 | 35 | 35 | 35 |
| | Pressure (bar) | 55 | 55 | 55 | 55 | 55 |
| | Hydrogen feed (g/h) | 0.4 | 1.0 | 1.0 | 0.6 | 0,6 |
| | Residence time (h) | 0.4 | 0.4 | 0.4 | 0.4 | 0.4 |
| **Loop Rector** | Temperature (°C) | 70 | 80 | 80 | 71 | 70 |
| | Propylene feed (kg/h) | 146 | 147 | 147 | 148 | 148 |
| | Prepol and Loop Hydrogen feed (g/h) | 0.4 | 6.7 | 6.0 | 1.0 | 0.6 |
| | Residence time (h) | 0.5 | 0.5 | 0.5 | 0.5 | 0.5 |
| | Production Split % | 41 | 43 | 43 | 44 | 47 |
| | $MFR_2$ (g/10 min) | 1.1 | 6.2 | 7.4 | 8.4 | 7.7 |
| | XS (%) | 1.5 | 2.0 | 2.6 | 2.3 | 2.1 |
| | Bulk density (kg/m3) | 441 | 458 | 458 | 369 | 371 |
| | Median particle size (mm) | 0.89 | 0.95 | 0.95 | 0.92 | 0.96 |
| **1st Gas Phase Reactor** | Temperature (°C) | 85 | 85 | 85 | 85 | 85 |
| | Pressure (bar) | 30 | 30 | 30 | 30 | 30 |
| | H2/C3 ratio (mol/kmol) | 2.3 | 19 | 21.6 | 6.5 | 1.4 |
| | Residence time (h) | 2.8 | 2.1 | 2.1 | 2.7 | 3.1 |
| | Loop + GPR1 Productivity (kg/g) | 37.4 | 52.6 | 51.3 | 28.9 | 24.6 |
| | Production Split % | 59 | 57 | 57 | 56 | 53 |
| | $MFR_2$ (g/10 min) | 3.9 | 6.2 | 7.7 | 3.9 | 3.7 |
| | XS (%) | 0.8 | 1.2 | 1.6 | 1.4 | 0.9 |
| | Bulk density (kg/m3) | 462 | 454 | 453 | 433 | 432 |
| | Median particle size (mm) | 1.3 | 1.5 | 1.5 | 1.4 | 1.4 |
| **Final Product** | PP Powder $MFR_2$ (g/10 min) | 6.4 | 7.1 | 7.7 | 2.5 | 3.6 |
| | PP Powder XS (%) | 0.5 | 1.7 | 1.5 | | 0.8 |
| | Gel 0.2 mm | | 1067 | 320 | 75 | 106 |
| | Gel 0.7mm | | 5 | 0 | 0 | 0 |
| | Gels 1.5 mm | | 0 | 0 | 0 | 0 |
| | Gel 2.5 mm | | 0 | 0 | 0 | 0 |

**Claims**

1. Method for transitioning between two different catalysts during the production of polypropylene homo- or copolymers in a continuous slurry/gas phase polymerization reaction with a prior prepolymerization reaction, the method comprises the steps of:

a) discontinuing the feed of the first catalyst into the prepolymerization reactor and then
b) introducing the second catalyst into the prepolymerization reactor,
c) adapting the reaction conditions in the prepolymerization reactor, the slurry reactor and in the subsequent gas phase reactor,

wherein the transition is performed between a Ziegler-Natta catalyst and an self-supported, solid metallocene catalyst, prepared by using an emulsion/solidification technology or vice versa,
whereby the transition is performed in the absence of any additional agent which deactivates or kills the catalyst.

**2.** Method according to claim 1 wherein the Ziegler-Natta catalyst used is a solid Ziegler-Natta catalyst selected from a $MgCl_2$-supported titanium Ziegler Natta catalyst and a self supported solid Ziegler Natta catalyst, prepared via an emulsion-solidification method.

**3.** Method according to claim 1 or 2 wherein the Ziegler-Natta catalyst used is prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

(I)

wherein $R_1'$ and $R_2'$ are independently at least a $C_5$-alkyl
under conditions where a transesterification between said $C_1$ to $C_2$ alcohol and said dialkylphthalate of formula (I) takes place to form the internal donor
c) washing the product of stage b) or
d) optionally reacting the product of step c) with additional $TiCl_4$.

**4.** Method according to claim 3 wherein the dialkylphthalate of formula (I) is dioctylphthalate, the alcohol is ethanol and the transesterification in step b) is performed at a temperature between 130 and 150°C.

**5.** Method according to claim 1 or 2 wherein the Ziegler-Natta catalyst used is prepared by using an emulsion/solidification technology said process comprising the steps of:

a) preparing a solution of a complex of a Group 2 metal and an electron donor by reacting a compound of said metal with said electron donor or a precursor thereof in an organic liquid reaction medium,
b) adding said solution of said complex to at least one compound of a transition metal to produce an emulsion, wherein the dispersed phase of which is in the form of droplets and contains more than 50 mol% of the Group 2 metal in said complex,
c) agitating the emulsion in order to maintain the droplets of said dispersed phase within a predetermined average size range,
d) solidifying said droplets of the dispersed phase,
e) washing the solidified particles at least once,
f) drying the solidified particles or slurring the solidified particles to an oily liquid without drying and optionally
g) recovering the dried or slurried solidified particles of the olefin polymerization catalyst component.

**6.** Method according to claim 5 wherein
in step a) the Group 2 metal is magnesium, the electron donor is dioctylphtalate and the organic liquid medium is toluene,
in step b) the transition metal is titanium and said compound of transition metal is chloride
in step c) said predetermined average size range of the droplets is in the range of 5 to 200μm and said emulsion is agitated in the presence of an emulsion stabilizer and/or turbulence minimizing agent and

in step d) the solidification of the droplets is done by heating to a temperature of 70 to 150°C.

**7.** Method according to any of preceding claims 1 to 6, wherein the Ziegler-Natta catalyst is used in combination with an external donor and an organometallic cocatalyst, the cocatalyst being selected from the group consisting of trialkylaluminium, dialkyl aluminium chloride and alkyl aluminium sesquichloride and the external donor being selected from the group consisting of di-iso-propyldiethoxysilane, cyclohexylmethyldiethoxysilane, dicyclopentyldimethoxysilane, cyclohexylmethyl-dimethoxysilane and dicyclopentadienyldiethoxysilane and diethylaminotriethoxysilane.

**8.** Method according to claim 1 wherein the metallocene catalyst used is prepared by an emulsion/solidification technology said process comprising the steps of:

a) preparing a solution of one or more catalyst components;
b) dispersing said solution in a solvent immiscible therewith to form an emulsion in which said one or more catalyst components are present in the droplets of the dispersed phase,
c) solidifying said dispersed phase to convert said droplets to solid particles and optionally recovering said particles to obtain said catalyst.

**9.** Method according to claim 8, wherein the solution in step a) comprises as catalyst components an organometallic compound of a transition metal of formula (II)

$$(Cp)_2R_nMX_2 \qquad \text{(II)}$$

wherein

each Cp independently is an unsubstituted or substituted and/or fused homo- or heterocyclopentadienyl ligand; the optional one or more substituent(s) being selected preferably from halogen, $C_1$-$C_{20}$-alkyl, $C_2$-$C_{20}$-alkenyl, $C_2$-$C_{20}$-alkinyl, $C_3$-$C_{12}$-cycloalkyl, $C_6$-$C_{20}$-aryl or $C_7$-$C_{20}$-arylalkyl, $C_3$-$C_{12}$-cycloalkyl which contains 1, 2, 3 or 4 heteroatom(s) in the ring moiety, $C_6$-$C_{20}$-heteroaryl, $C_1$-$C_{20}$-haloalkyl, -SiR"$_3$, -SR", - PR"$_2$ or -NR"$_2$, each R" is independently a hydrogen or $C_1$-$C_{20}$-alkyl, $C_2$-$C_{20}$-alkenyl, $C_2$-$C_{20}$-alkinyl, $C_3$-$C_{12}$-cycloalkyl or $C_6$-$C_{20}$-aryl; or in case of -NR"$_2$, the two substituents R" can form a ring together with the nitrogen atom wherein they are attached to,
R is a bridge of 1-7 atoms and 0-4 heteroatoms, wherein the heteroatom(s) can be Si, Ge and/or O atom(s), whereby each of the bridge atoms may bear independently substituents selected from $C_1$-$C_{20}$-alkyl, tri($C_1$-$C_{20}$-alkyl)silyl, tri($C_1$-$C_{20}$-alkyl)siloxy or $C_6$-$C_{20}$-aryl substituents; or a bridge of 1-3 hetero atoms selected from silicon, germanium and/or oxygen atom(s),
M is a transition metal selected from Ti, Zr or Hf,
each X is independently H, halogen, $C_1$-$C_{20}$-alkyl, $C_1$-$C_{20}$-alkoxy, $C_2$-$C_{20}$-alkenyl, $C_2$-$C_{20}$-alkinyl, $C_3$-$C_{12}$-cycloalkyl, $C_6$-$C_{20}$-aryl, $C_6$-$C_{20}$-aryloxy, $C_7$-$C_{20}$-arylalkyl, $C_7$-$C_{20}$-arylalkenyl, -SR", -PR"$_3$. -SiR"$_3$, -OSiR"$_3$ or -NR"$_2$; each R" is independently hydrogen or $C_1$-$C_{20}$-alkyl, $C_2$-$C_{20}$-alkenyl, $C_2$-$C_{20}$-alkinyl, $C_3$-$C_{12}$-cycloalkyl or $C_6$-$C_{20}$-aryl; or in case of -NR"$_2$, the two substituents R" can form a ring, e.g. five- or six-membered ring, together with the nitrogen atom wherein they are attached to,
n is 0 or 1,

and a $C_1$-$C_{10}$-alkylalumoxane-cocatalyst and as solvent an aromatic hydrocarbons selected from the group consisting of toluene, benzene, xylene, ethylbenzene, cumene mesitylene or cymene,
in step b) the immiscible solvent which forms the continuous phase comprises a semi-, highly- or perfluorinated hydrocarbon, a functionalized derivative thereof or mixtures thereof, whereby an emulsifying agent is present during the formation of said emulsion and
in step c) the solidification is effected by a temperature change treatment.

**10.** Method according to any of preceding claims 1 to 9, wherein the metallocene catalyst is used in the presence of an trialkylaluminum compound as scavenging agent.

**11.** Method according to any of preceding claims 1 to 10 wherein the transitioning between the metallocene catalyzed polymerization to the Ziegler-Natta catalyzed polymerization comprises the following steps:

- first the metallocene catalyzed polymerization is started by introducing a metallocene catalyst as claimed in

claim 1, 8 or 9 via an oil catalyst feed system to the prepolymerization reactor and furthermore adding propylene, hydrogen and a scavenger to the prepolymerization reactor,
- then the prepolymerized catalyst, additional propylene and optionally additional hydrogen are introduced into the loop reactor, afterwards recovering the polymerization product from the loop reactor and conducting it to a gas phase reactor fluid bed, optionally feeding additional propylene and optional comonomer to the gas phase reactor, optionally feeding additional hydrogen to the gas phase reactor to control the hydrogen-to-propylene ratio to provide the desired molecular mass of the polymerization product, recovering the polymerization product from the gas phase reactor,
- the reaction conditions in the loop and the gas phase reactor are chosen according to the desired product parameters of the first product to be produced,
- during metallocene catalyzed polymerization a Ziegler-Natta catalyst, as claimed in claim 1, 2, 3, 4, 5 and 6, is introduced into a catalyst feed tank 130 to 200 min before introducing it into the prepolymerization reactor,
- 30 min to 120 min before introducing the Ziegler-Natta catalyst into the prepolymerization reactor the feed of the external donor to the prepolymerization reactor is started,
- 5 min to 20 min before introducing the Ziegler-Natta catalyst into the prepolymerization reactor the feed of the cocatalyst to the prepolymerization reactor is started,
- then the Ziegler-Natta catalyst is fed into the prepolymerization reactor,
- 5 to 20 min afterwards the hydrogen feed is adapted to the need of the second polymerization product to be produced,
- furthermore the loop reaction conditions and the gas phase reactor conditions are adapted to the need of the second polymerization product.

**12.** Method according to any of preceding claims 1 to 10 wherein the transitioning between the Ziegler-Natta catalyzed polymerization to metallocene catalyzed polymerization comprises the following steps:

- first the Ziegler-Natta catalyzed polymerization is started by introducing the Ziegler-Natta catalyst, as claimed in claim 1, 2, 3, 4, 5 and 6, via a catalyst feed system to the prepolymerization reactor and furthermore propylene and hydrogen and optionally a cocatalyst and an external donor, whole amount or only part therefrom, are added to the prepolymerization reactor,
- then the prepolymerized catalyst, additional propylene, hydrogen, optionally additional cocatalyst and external donor are introduced into the loop reactor, afterwards recovering the polymerization product from the loop reactor and conducting it to a gas phase reactor fluid bed, optionally feeding additional propylene and optional comonomer to the gas phase reactor, optionally feeding additional hydrogen to the gas phase reactor to control the hydrogen-to-propylene ratio to provide the desired molecular mass of the polymerization product, recovering the polymerization product from the gas phase reactor,
- whereby the reaction conditions in the loop and the gas phase reactor are chosen according to the desired product parameters of the first product to be produced,
- during Ziegler-Natta catalyzed polymerization a metallocene catalyst, as claimed in claim 1, 8 or 9, is introduced into an oil catalyst feed tank 130 to 200 min before introducing it into the prepolymerization reactor,
- 100 to 180 min before introducing the metallocene catalyst into the prepolymerization reactor the reaction conditions in the loop reactor are adapted to the need of the second product to be produced,
- afterwards, 80 to 150 min before introducing the metallocene catalyst into the prepolymerization reactor, the hydrogen feed in the gas phase reactor is adapted to the need of the second product,
- then, 70 to 100 min before introducing the metallocene catalyst into the prepolymerization reactor, the $H_2$ feed for the prepolymerization reactor and in the loop reactor is adapted to the need of the second product,
- subsequently, 50 min to 70 min before introducing the metallocene catalyst into the prepolymerization reactor, the cocatalyst feed and the donor feed are reduced,
- 15 min to 45 min before introducing the metallocene catalyst into the prepolymerization reactor the donor feed is stopped,
- then the metallocene catalyst is fed into the prepolymerization reactor and
- 10 to 40 min afterwards the gas phase reactor conditions are adapted to the desired product parameters of the second product to be produced.

**13.** Method according to any of preceding claims 1 to 12, wherein the residence time in the loop reactor is 0.2h to 1.0h.

**14.** Method according to any of preceding claims 1 to 13, wherein the prepolymerization reactor is a continuous stirred tank reactor and the prepolymerization reaction is conducted at a temperature from 15 to 40°C and a pressure from 30 to 70 bar.

**15.** Method according to any of preceding claims 1 to 14, wherein in the loop reactor the reaction temperature is in the range of 60 to 100°C, the temperature during the metallocene catalyzed polymerization being 5 to 15°C below the temperature during the Ziegler-Natta catalyzed polymerization.

**Figure 1: Examples 1 to 5, Production rates in the polymerization process**

Catalyst transition in PP production, Production rate
1
2
3
4
5
6
Production rate (kg/h)
90
80
70
60
50
40
30
20
10
0
0 2 4 6 8 10 12 14 16 18 20 22 24 26 28 30 32 34 36 38 40 42 44 46 48 50 52
Hours from the beginning of the test serie
LOOP REACTOR Production rate (kg/h)
1 st GAS PHASE REACTOR Production rate (kg/h)
TOTAL Production rate total
(Loop reactor lowest line
GPR middle line
Total upper line)
1 EXAMPLE 1, CATALYST A
2 TRANSITION CATALYST C
3 EXAMPLE 2, CATALYST C
4 EXAMPLE 3, CATALYST C
5 EXAMPLE 4, CATALYST A
6 EXAMPLE 5, CATALYST A

**Figure 2: Example 6; Production rate**

Example 6, Catalyst transition from B to A, Production rate
CATALYST B
TRANSITION
CATALYST A
CATALYST A
Production rate (kg/h)
70
60
50
40
30
20
10
0
0
2
4
6
8
10
12
14
16
18
20
22
24
26
28
30
32
Hours from the beginning of the test serie
Production rate in Loop reactor (kg/h)
Production rate in GPR (kg/h)
Production rate in total (kg/h)
(Loop reactor lowest line
GPR middle line
Total upper line)

Europäisches Patentamt
European Patent Office
Office européen des brevets

# EUROPEAN SEARCH REPORT

Application Number
EP 09 15 1716

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 96/02583 A (MONTELL TECHNOLOGY COMPANY BV [NL]) 1 February 1996 (1996-02-01)<br>* examples 1-5 *<br>* claims 1,6,7,9-13,16-22 *<br>----- | 1-15 | INV.<br>C08F2/00<br>C08F10/06<br>C08F4/649<br>C08F4/6592<br>C08F4/654 |
| A | WO 03/008496 A (BASELL POLYOLEFINE GMBH [DE]; RESCONI LUIGI [IT]; BARUZZI GIOVANNI [IT) 30 January 2003 (2003-01-30)<br>* examples 1-4 *<br>* claims 1-17 *<br>----- | 1-15 | |
| A | WO 00/17244 A (NOVA CHEM INT SA [CH]; JABER ISAM [CA]; BROWN STEPHEN JOHN [CA]) 30 March 2000 (2000-03-30)<br>* example 1 *<br>* tables 1-3 *<br>* claims 1,3,6-9 *<br>----- | 1-15 | |
| A,D | WO 92/19653 A (NESTE OY [FI]) 12 November 1992 (1992-11-12)<br>* page 8 - page 20 *<br>* claims 1-12 *<br>----- | 1-4,7 | TECHNICAL FIELDS SEARCHED (IPC)<br>C08F |
| A | EP 1 270 610 A (BOREALIS TECH OY [FI] BOREALIS POLYMERS OY [FI]) 2 January 2003 (2003-01-02)<br>* examples 1-6 *<br>* claims 1-33 * | 1,5,6 | |
| A,D | & WO 03/000756 A (BOREALIS POLYMERS OY [FI]; DENIFL PETER [AT]; LEINONEN TIMO [FI]) 3 January 2003 (2003-01-03)<br>----- | 1,5,6 | |
| A,D | EP 1 323 747 A (BOREALIS TECH OY [FI]) 2 July 2003 (2003-07-02)<br>* example 1 *<br>* claims 1-26 *<br>----- | 1,8-10 | |

The present search report has been drawn up for all claims

| Place of search | Date of completion of the search | Examiner |
|---|---|---|
| Munich | 21 July 2009 | Gamb, Véronique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

3
EPO FORM 1503 03.82 (P04C01)

## ANNEX TO THE EUROPEAN SEARCH REPORT ON EUROPEAN PATENT APPLICATION NO. EP 09 15 1716

This annex lists the patent family members relating to the patent documents cited in the above-mentioned European search report. The members are as contained in the European Patent Office EDP file on
The European Patent Office is in no way liable for these particulars which are merely given for the purpose of information.

21-07-2009

| Patent document cited in search report | Publication date | Patent family member(s) | Publication date |
|---|---|---|---|
| WO 9602583 A | 01-02-1996 | AT 179724 T | 15-05-1999 |
| | | AU 693239 B2 | 25-06-1998 |
| | | AU 3113295 A | 16-02-1996 |
| | | BG 63015 B1 | 31-01-2001 |
| | | BG 100515 A | 31-01-1997 |
| | | BR 9506342 A | 05-08-1997 |
| | | CA 2171835 A1 | 01-02-1996 |
| | | CN 1134712 A | 30-10-1996 |
| | | CZ 9601135 A3 | 16-10-1996 |
| | | DE 69509488 D1 | 10-06-1999 |
| | | DE 69509488 T2 | 04-11-1999 |
| | | DK 0720629 T3 | 01-11-1999 |
| | | EP 0720629 A1 | 10-07-1996 |
| | | ES 2132695 T3 | 16-08-1999 |
| | | FI 961268 A | 02-05-1996 |
| | | HU 74779 A2 | 28-02-1997 |
| | | IL 114638 A | 31-12-1999 |
| | | IT 1273660 B | 09-07-1997 |
| | | JP 9503250 T | 31-03-1997 |
| | | JP 4131986 B2 | 13-08-2008 |
| | | NO 961108 A | 10-05-1996 |
| | | PL 313587 A1 | 08-07-1996 |
| | | RU 2176252 C2 | 27-11-2001 |
| | | SK 49396 A3 | 05-03-1997 |
| | | TR 960075 A2 | 21-06-1996 |
| | | TW 424099 B | 01-03-2001 |
| | | US 5589549 A | 31-12-1996 |
| | | ZA 9505987 A | 18-06-1996 |
| WO 03008496 A | 30-01-2003 | JP 2004535505 T | 25-11-2004 |
| | | US 2004242815 A1 | 02-12-2004 |
| WO 0017244 A | 30-03-2000 | AT 244733 T | 15-07-2003 |
| | | AU 5403699 A | 10-04-2000 |
| | | BR 9913881 A | 24-07-2001 |
| | | CA 2247703 A1 | 22-03-2000 |
| | | CN 1319107 A | 24-10-2001 |
| | | DE 69909502 D1 | 14-08-2003 |
| | | DE 69909502 T2 | 09-06-2004 |
| | | EP 1124864 A1 | 22-08-2001 |
| | | ES 2203165 T3 | 01-04-2004 |
| | | JP 2002526573 T | 20-08-2002 |
| | | US 6277931 B1 | 21-08-2001 |
| WO 9219653 A | 12-11-1992 | CA 2102816 A1 | 10-11-1992 |
| | | DE 69224435 D1 | 19-03-1998 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 09 15 1716

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2009

| Patent document cited in search report | Publication date | Patent family member(s) | Publication date |
|---|---|---|---|
| WO 9219653 A | | DE 69224435 T2 | 24-09-1998 |
| | | EP 0591224 A1 | 13-04-1994 |
| | | FI 88047 B | 15-12-1992 |
| | | JP 3226538 B2 | 05-11-2001 |
| | | JP 6511501 T | 22-12-1994 |
| | | NO 933962 A | 02-11-1993 |
| | | US 6303532 B1 | 16-10-2001 |
| EP 1270610 A | 02-01-2003 | AT 328015 T | 15-06-2006 |
| | | CN 1518564 A | 04-08-2004 |
| | | DE 60120141 T2 | 29-03-2007 |
| | | WO 03000756 A1 | 03-01-2003 |
| | | ES 2265376 T3 | 16-02-2007 |
| | | US 2005014662 A1 | 20-01-2005 |
| WO 03000756 A | 03-01-2003 | AT 328015 T | 15-06-2006 |
| | | CN 1518564 A | 04-08-2004 |
| | | DE 60120141 T2 | 29-03-2007 |
| | | EP 1270610 A1 | 02-01-2003 |
| | | ES 2265376 T3 | 16-02-2007 |
| | | US 2005014662 A1 | 20-01-2005 |
| EP 1323747 A | 02-07-2003 | AU 2002366265 A1 | 30-06-2003 |
| | | BR 0214895 A | 14-12-2004 |
| | | CA 2468881 A1 | 26-06-2003 |
| | | CN 1871264 A | 29-11-2006 |
| | | WO 03051934 A2 | 26-06-2003 |
| | | HU 0402484 A2 | 29-03-2005 |
| | | JP 2005511866 T | 28-04-2005 |
| | | TW 229092 B | 11-03-2005 |
| | | US 2008275200 A1 | 06-11-2008 |
| | | US 2005054518 A1 | 10-03-2005 |
| | | US 2008064835 A1 | 13-03-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0604993 A
- WO 9214766 A
- US 4460755 A
- WO 9526370 A
- US P6949612 A
- EP 0887379 A
- WO 9212182 A
- WO 2005002744 A
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 03000755 A
- WO 2004029112 A
- WO 9219659 A
- WO 9219653 A
- WO 9219658 A
- US 4382019 A
- US 4435550 A
- US 4465782 A
- US 4473660 A
- US 4560671 A
- US 5539067 A
- US 5618771 A
- EP 45975 A
- EP 45976 A
- EP 45977 A
- WO 9532994 A
- US 4107414 A
- US 4186107 A
- US 4226963 A
- US 4347160 A
- US 4472524 A
- US 4522930 A
- US 4530912 A
- US 4532313 A
- US 4657882 A
- US 4581342 A
- EP 0491566 A
- EP 1862481 A
- EP 1862482 A
- EP 1717269 A
- WO 9924478 A
- WO 9924479 A
- WO 0068315 A
- EP 1862480 A
- WO 03051934 A
- WO 2006069733 A
- EP 129368 A
- EP 491566 A
- EP 591224 A
- EP 586390 A